# EUROPÄISCHE PATENTSCHRIFT

(11) **EP 1 513 777 B1**
(45) Veröffentlichungstag und Bekanntmachung des Hinweises auf die Patenterteilung: **07.03.2012**
(21) Anmeldenummer: 03732340.9
(22) Anmeldetag: 09.05.2003
(51) Int. Cl.: C03B 23/207

(54) **VERFAHREN ZUM VERSCHLIESSEN EINES HOHLKOERPERS AUS GLAS SOWIE HOHLKOERPER AUS GLAS**
METHOD FOR CLOSING A HOLLOW GLASS BODY, AND HOLLOW GLASS BODY
PROCEDE D'OBTURATION D'UN CORPS CREUX EN VERRE ET CORPS CREUX EN VERRE

(30) Priorität: 14.06.2002 DE 10226591
(43) Veröffentlichungstag der Anmeldung: 16.03.2005
(73) Patentinhaber: Gantenbrink, Rudolf, 81925 München (DE)
(72) Erfinder: Gantenbrink, Rudolf, 81925 München (DE)
(74) Vertreter: Grünecker, Kinkeldey, Stockmair & Schwanhäusser
(86) Internationale Anmeldenummer: PCT/EP2003/004889
(87) Internationale Veröffentlichungsnummer: WO 2003/106357

(56) Entgegenhaltungen:
- GB-A- 221 107
- US-A- 2 009 738

## Beschreibung

Die Erfindung bezieht sich auf ein Verfahren zum Verschließen eines zuvor befüllten Hohlkörpers aus Glas, welcher einen im Wesentlichen zylindrischen Einfüllstützen aufweist, wobei der Einfüllstutzen nach dem Befüllen des Hohlkörpers durch einen Schmelzprozess verschlossen wird, wobei in den Einfüllstutzen ein Verschlussstopfen aus Glas eingesetzt wird, der zumindest einen Teil des über der Füllung des Hohlkörpers liegenden Luftvolumens verdrängt, und der dann an seinem Umfang mit dem umlaufenden freien Ende des zylindrischen Einfüllstutzens verschmolzen wird, während der in den Einfüllstutzen hineinragende Bereich des Glasstopfens einen Außendurchmesser aufweist, der im Wesentlichen dem Innendurchmesser des Einfüllstutzens entspricht. Die Erfindung bezieht sich auch auf einen Bausatz mit einem befüllbaren und verschließbaren Hohlkörper aus Glas, bei dem der Hohlkörper einen dünnwandigen, im Wesentlichen zylindrischen Einfüllstutzen aus Glas aufweist und mit einem in den Einfüllstutzen hineinpassenden Glasstopfen, wobei der Glastopfen als dünnwandiger Hohlkörper aus Glas und der in den Einfüllstutzen hineinragende Bereich des Glasstopfens einen Außendurchmesser aufweist, der im Wesentlichen dem Innendurchmesser des Einfüllstutzens entspricht. Die Erfindung betrifft auch einen gefüllten Hohlkörper aus Glas mit einem im Wesentlichen zylindrischen Einfüllstutzen und einem in diesen hineinragenden, einstückig mit dem Einfüllstutzen aus Glas mittels eines Schmelzvorgangs verbundenen Verschlussstopfens aus Glas, wobei der Einfüllstutzen ein oben freies Ende aufweist.

In der nachveröffentlichten deutschen Patentanmeldung 10209990, die auf den hiesigen Anmelder zurückgeht, ist eine Weinflasche beschrieben, die einen Verschlussstopfen aus Glas aufweist, durch dessen Entfernen die Weinflasche später geöffnet werden kann. Der Verschlussstopfen selbst ist vor dem Befüllen der Weinflasche mit einem im Wesentlichen zylindrischen Einfüllstutzen aus dünnwandigem Glas versehen. Durch diesen Einfüllstutzen hindurch wird die Flasche mit Wein befüllt. Anschließend wird der dünnwandige zylindrische Einfüllstutzen durch einen Schmelzprozess verschlossen. Wie auch bei einer Ampulle bringt das in der DE 10209990 beschriebene Verfahren mit sich, dass oberhalb des eingefüllten Gutes ein Luftraum verbleibt. Ein solcher Luftraum kann aber je nach eingefülltem Gut unerwünscht sein. Insbesondere beim Abfüllen hochwertiger Weine möchte man die Reaktion des Weins mit Luft möglichst unterbinden. Hohlkörper aus Glas zum Verschließen von Glasflaschen sowie Verfahren zum Durchführen des Verschließens sind aus der GB 221107 und der US 2009738 bekannt.

Es ist daher Aufgabe der vorliegenden Erfindung, ein Verfahren, einen gefüllten Hohlkörper und einen Bausatz der eingangs beschriebenen Art zur Verfügung zu stellen, mit welchem es möglich ist, ein möglichst geringes Restgasvolumen oberhalb des Füllgutes zu erreichen.

Diese Aufgabe wird erfindungsgemäß insbesondere durch die Merkmale der Ansprüche 1, 7 und 8 gelöst, insbesondere dass in den Einfüllstutzen ein Verschlussstopfen aus Glas eingesetzt wird, der zumindest einen Teil des über der Füllung des Hohlkörpers liegenden Luftvolumens verdrängt, und der dann an seinem Umfang mit dem umlaufenden freien Ende des zylindrischen Einfüllstutzens verschmolzen wird.

Insbesondere wird ein Glasstopfen verwendet, der an seinem freien Ende einen radial abstehenden Flansch aufweist, dessen Außendurchmesser etwa dem Außendurchmesser des Einfüllstutzens entspricht, wobei der Außendurchmesser des in den Einfüllstutzen hineinragenden Abschnitts des Glasstopfens etwa dem Innendurchmesser des Einfüllstutzens entspricht. Hierdurch wird nicht nur das Restgasvolumen im Hohlkörpers sondern auch das durch die Erwärmung und nachfolgende Vakuum entstandene Volumen soweit wie möglich verringert; Wärmeübertragung durch Konvektion beim Abschmelzprozess wird so gut wie vollständig ausgeschlossen. Es findet praktisch nur noch Wärmeleitung über das dünnwandige Glas statt. Auf die Art und Weise ist es möglich, auch thermisch empfindliche Produkte in derartige Hohlkörper zu füllen diesen dann hermetisch zu verschließen.

Hierdurch ergeben sich eine Reihe von Vorteilen. Dadurch, dass der Verschlussstopfen in den Einfüllstutzen hineinragt, wird ein Teil des sich oberhalb der Füllung befindenden Luftvolumens verdrängt. Je durch Wahl der Länge und des Durchmessers des Verschlussstopfens kann das Restgasvolumen in dem befüllten Hohlkörper gezielt gesteuert werden, wobei der Verschlussstopfen auch in die Flüssigkeit des Hohlkörpers eintauchen kann. Darüber hinaus wird das in dem Hohlkörper befindliche Gut beim Verschließen der Flasche weniger aufgewärmt, da bei dem Schmelzprozess beim Verschließen des Hohlkörpers ein geringeres Luftvolumen zur Verfügung steht, welcher über Konvektion eine Erwärmung des Füllgutes bewirken könnte. Da der Einfüllstutzen durch den eingesetzten Verschlussstopfen verstärkt wird, ist es möglich, die Wandstärke des Glases sowohl beim Einfüllstutzen als auch beim Verschlussstopfen selbst weiter zu reduzieren, ohne dass die Festigkeit der Einfüllöffnung hierunter leidet.

In dem Zusammenhang ist es vorteilhaft, wenn als Verschlussstopfen ein dünnwandiger hohler Glasstopfen verwendet wird, dessen Wandstärke kleiner ist als die des Einfüllstutzens, vorzugsweise etwa 50% der Wandstärke des Einfüllstutzens.

Gemäß einer Weiterbildung der Erfindung ist auf der Außenseite des in den Einfüllstutzen hineinragenden Abschnitts des Verschlussstopfens eine Beschriftung aufgebracht. Es kann sich hierbei um die Identifizierung des Abfüllers oder sonstiger relevanter Daten für das Füllgut handeln. Nach Einsetzen des Verschlussstopfens ist die Beschriftung zwar durch die Glaswand des Einfüllstutzens oder aber durch das Innere des Verschlussstopfens hindurch lesbar; sie ist jedoch nicht von außen zugänglich und damit fälschungssicher.

Bevorzugt wird, auch, dass der Glasstopfen unmittelbar unterhalb des Flansches eine Einschnürung aufweist, deren Außendurchmesser kleiner ist als der Außendurchmesser des übrigen, in den Stutzen hineinragenden Abschnitts des Glasstopfens. Diese Einschnürung, die verhindert, dass beim Schmelzprozess die Wandungen von Einfüllstutzen und Verschluss und Glasstopfen miteinander verschmelzen, erlaubt andererseits, dass der Außendurchmesser des in den Einfüllstutzen hineinragenden Abschnitts des Glasstopfens nur geringfügig kleiner ist, als der Innendurchmesser des Einfüllstutzens, wodurch die durch den Schmelzprozess bedingte Wärmeübertragung auf ein Minimum reduziert werden kann. Durch die Einschnürung bilden sich gut gerundete Übergänge zwischen Stutzen und Glasstopfen.

Günstig ist es auch, wenn der Flansch zumindest auf seiner dem Einfüllstutzen zugewandten Seite eine umlaufende Zentrierschräge aufweisen würde.

Gemäß einer Variante kann der Verschlussstopfen stufenförmig ausgebildet sein, in dem sich an den Flansch ein außerhalb des Einfüllstutzens liegender Abschnitt anschließt. Dieser Abschnitt kann zur Handhabung des Verschlussstopfens beim Einsetzen desselben in den Einfüllstutzen dienen. Nach dem Verschließen des Hohlkörpers wird der außerhalb liegende Bereich einfach abgebrochen.

Im Folgenden wird die Erfindung beispielhaft erläutert. Es zeigen:
- Fig. 1 - 3: einzelne Verfahrensschritte beim Verschließen eines Hohlkörpers aus Glas;
- Fig. 4: den gem, den vorbeschriebenen Figuren verwendeten Verschlussstopfen;
- Fig. 5: das Detail V aus Fig. 2;
- Fig. 6 - 8: die Verfahrensschritte zum Verschließen eines Hohlkörpers gem, einer Variante der Erfindung;
- Fig. 9: den gem. Fig. 6 - 8 verwendeten Verschlussstopfen;
- Fig. 10-12: die einzelnen Schritte eines Verfahrens zum Verschließen eines Hohlkörpers gem, einer zweiten Variante, und
- Fig. 13: den gem. Fig. 10 - 12 verwendeten Verschlussstopfen.

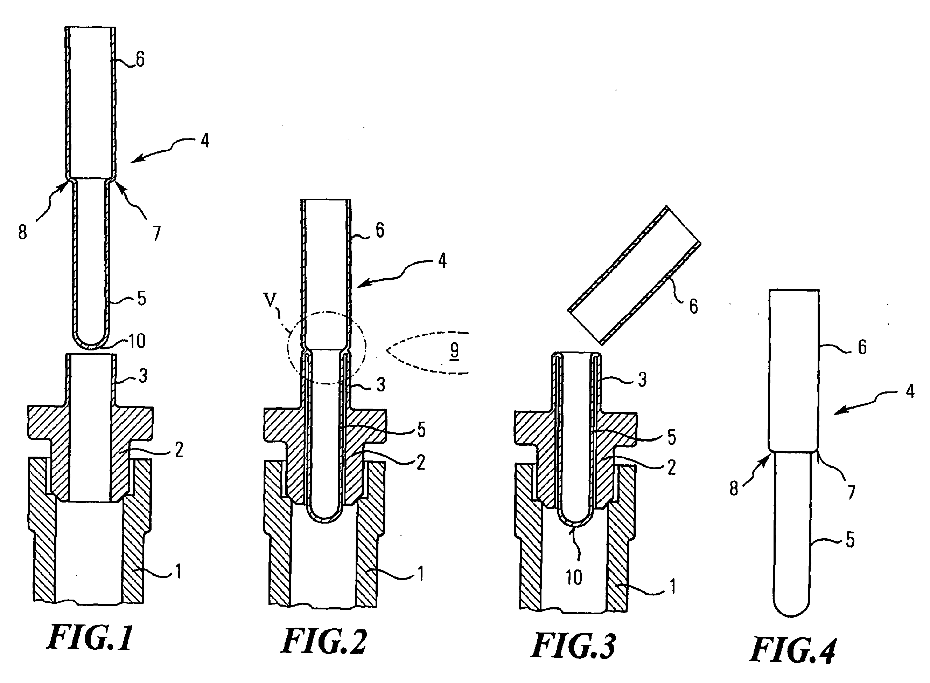

Fig. 1 zeigt im unteren Teil den Flaschenhals 1 einer nicht näher dargestellten Weinflasche aus Glas, der an seinem oberen Teil mit einem Verschlusselement 2, ebenfalls aus Glas versehen ist. Das Verschlusselement 2 weist einen dünnwandigen, zylindrischen Einfüllstutzen 3 auf. Eine solche Anordnung ist in der DE 10209990 im Detail beschrieben. Auf diese Anmeldung wird zum Zwecke der Offenbarung Bezug genommen.

Oberhalb des Einfüllstutzens ist ein stufenförmiger Glasstopfen 4 dargestellt, der einen unteren Abschnitt 5 und einen oberen Abschnitt 6 aufweist. Der untere Abschnitt 5 ist zylinderförmig, mit einem kalottenförmigen Boden 6 ausgebildet und besitzt einen Außendurchmesser, der nur geringfügig kleiner ist als der Innendurchmesser des Einfüllstutzens 3. Der obere Abschnitt 6 hingegen weist einen Außendurchmesser auf, der im wesentlichen dem Außendurchmesser des Einfüllstutzens 3 entspricht. Die Wandstärke des Verschlussstopfens entspricht im wesentlichen der Wandstärke des Einfüllstutzens 3, kann allerdings auch dünnwandiger sein. Bevorzugt wird eine Wandstärke des Glasstopfens 4 von 0,5 mm und eine Stärke des Einfüllstutzens 3 von 1 mm. An der Übergangsstelle zwischen dem Abschnitt 5 und 6 ist ein sich radial nach außen erstreckender Flansch 7 vorgesehen, dessen dem Einfüllstutzen zugewandte Seite im Sinne einer Zentrierungsschräge 8 leicht trichterförmig ausgebildet ist. Wie aus Fig. 4 ersichtlich ist, kann auf der Außenseite des Glasstopfens 4, genauer auf der Außenseite des Abschnittes 5, eine Beschriftung aufgebracht sein, die beispielsweise Angaben über den Abfüller und das Abfülldatum enthält.

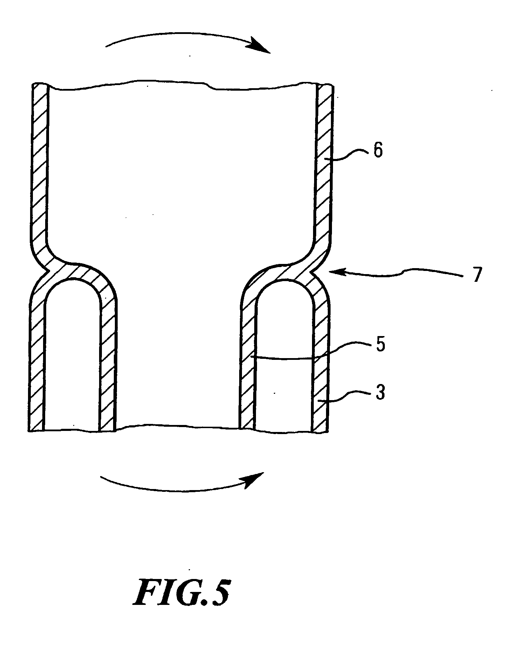

Das eigentliche Verschließen geschieht wie folgt. Der Glasstopfen 4 wird, ausgehend von der Stellung in Fig. 1 mit seinem unteren Abschnitt 5 in den Einfüllstutzen 3 eingesetzt, bis der Flansch 7 auf dem oberen freien Ende des Einfüllstutzens aufliegt. Auf Höhe des Flansches 7 wird dann rundum mit einer Flamme 9 das Glas aufgeschmolzen, wodurch sich der Flansch 7 mit dem oberen Ende des Einfüllstutzens verbindet. Genauer ist dies in der Detailansicht gem. Fig. 5 zu erkennen, die den Zustand nach dem Verschmelzen darstellt. Anhand der Fig. 2 ist gut zu erkennen, dass der nach innen ragende Abschnitt 5 des Glasstopfens 4 nicht nur das Luftvolumen in dem Teil 2 verdrängt, sondern auch verhindert, dass beim Schmelzprozess Luft von der Schmelzstelle ins Innere der Flasche gelangen kann. Der Schmelzprozess führt lediglich einer lokalen Erwärmung des Glasstopfens 4 und des Einfüllstutzens 3 im Bereich der Nahtstelle, nicht jedoch dort, wo der Einfüllstutzen in das relativ dickwandige Verschließteil mündet.

Wie besser Fig. 3 zeigt, wird der obenliegende Abschnitt 6, der im wesentlichen lediglich zur Handhabung des Glasstopfens beim Verschließvorgang dient, abgebrochen. Besondere Maßnahmen sind hier nicht zu treffen, da, wie aus Fig. 5 hervorgeht, sich durch den Schmelzprozess eine Einkerbung oberhalb des Einfüllstützens bildet, die ein definiertes Abreißen erzwingt.

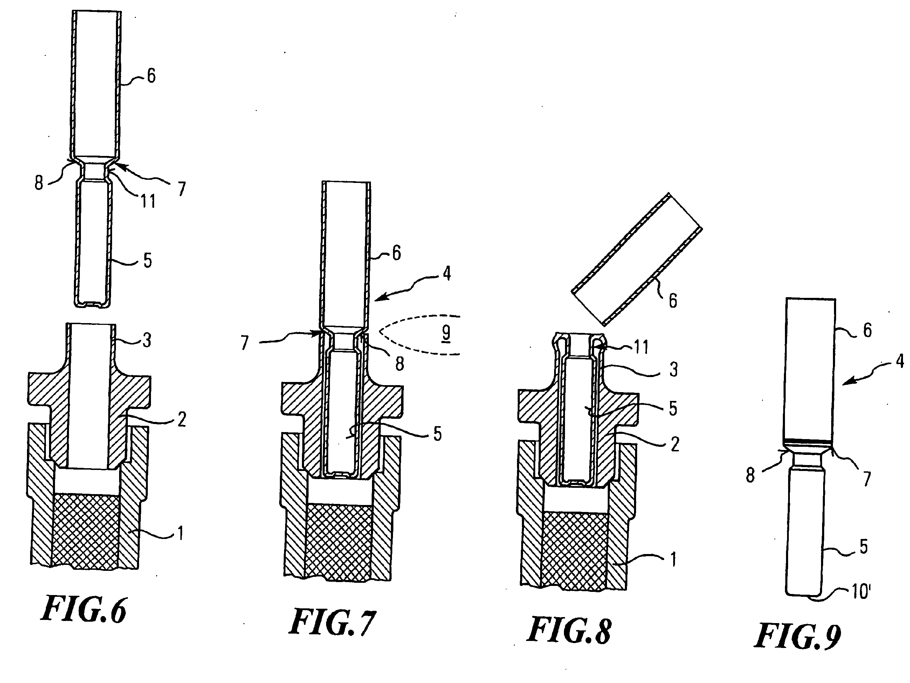

Die Fig. 6 - 9 zeigen eine Variante des zuvor beschriebenen Verfahrens und im Folgenden wird daher nur noch auf die Unterschiede eingegangen. Betrachtet man zunächst den Verschlussstopfen gem. Fig. 9, so erkennt man, dass dieser sich durch seinen Boden 10' von dem zuvor beschriebenen Ausführungsbeispiel unterscheidet.

Weiteres Unterscheidungsmerkmal ist, dass sich unterhalb des Flansches 7 eine Einschnürung 11 befindet, deren Außendurchmesser geringer ist als der Außendurchmesser des übrigen, in den Einfüllstutzen 3 ragenden Abschnitts 5 des Verschlussstopfens 4. Grundsätzlich erfolgt das Verschließen bei der in den Fig. 6 - 9 dargestellten Variante genauso wie bei der zuvor beschriebenen Variante. Allerdings wird bei dem in Fig. 7 gezeigten Schmelzprozess von oben ein leichter Druck auf den Glasstopfen ausgeübt, welcher zusammen mit dem Schmelzprozess dafür sorgt, dass sich die Verbindungsstelle zwischen dem Einfüllstutzen und dem Glasstopfen ausrundet, wie besser in Fig. 8 zu ersehen ist.

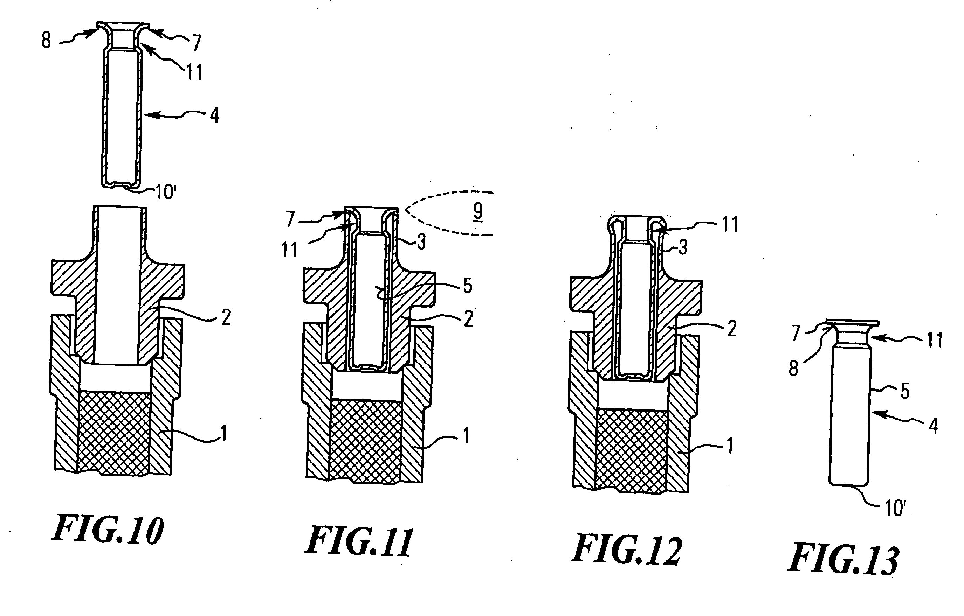

In den Fig. 10 - 13 ist eine zweite Variante des zuvor beschriebenen Verfahrens dargestellt. Gegenüber der Variante gem, den Fig. 6 - 9 unterscheidet sich diese Variante im Wesentlichen dadurch, dass der Glasstopfen keinen über den Flansch 7 hinausragenden Abschnitt aufweist. Diese Variante hat daher den Vorteil, dass das Abbrechen eines überstehenden Abschnittes des Glasstopfens entfällt. Im übrigen muss der Schmelzprozess gem. Fig. 11 nicht notwendigerweise mit einer seitlich angesetzten Flamme erfolgen. Hier ist es vielmehr auch möglich, Wärmequellen einzusetzen, die oberhalb des Glasstopfens angeordnet sind.

## Patentansprüche

1. Verfahren zum Verschließen eines zuvor befüllten Hohlkörpers aus Glas, welcher einen im Wesentlichen zylindrischen Einfüllstutzen (3) aufweist, wobei der Einfüllstutzen aus Glas nach dem Befüllen des Hohlkörpers durch einen Schmelzprozess verschlossen wird, wobei in den Einfüllstutzen (3) ein Verschlussstopfen aus Glas eingesetzt wird, der zumindest einen Teil des über der Füllung des Hohlkörpers liegenden Luftvolumens verdrängt, und der dann an seinem Umfang mit dem umlaufenden freien Ende des zylindrischen Einfüllstutzens (3) verschmolzen wird, während der in den Einfüllstutzen hineinragende Bereich (5) des Glasstopfens (4) einen Außendurchmesser aufweist, der im Wesentlichen dem Innendurchmesser des Einfüllstutzens entspricht, **dadurch gekennzeichnet, dass** der Glasstopfen einen radial abstehenden Flansch (7) aufweist, dessen Außendurchmesser dem Außendurchmesser des Einfüllstutzens (3) entspricht und der Flansch (7) auf der dem Einfüllstutzen (3) zugewandten Seite eine umlaufende Zentrierschräge (8) aufweist.

2. Verfahren nach Anspruch 1, **dadurch gekennzeichnet, dass** ein dünnwandiger, hohler Glasstopfen (4) verwendet wird, dessen Wandstärke kleiner oder gleich der des Einfüllstutzens (3) ist, vorzugsweise 50% der Wandstärke des Einfüllstutzens (3) entspricht.

3. Verfahren nach einem der Ansprüche 1 oder 2, **dadurch gekennzeichnet, dass** auf der Außenseite des in den Einfüllstutzen (3) hineinragenden Abschnitts (5) des Glasstopfens (4) eine Beschriftung aufgebracht ist.

4. Verfahren nach einem der Ansprüche 1 bis 3, **dadurch gekennzeichnet, dass** der Glasstopfen (4) unmittelbar unterhalb des Flansches (7) eine Einschnürung aufweist, deren Außendurchmesser kleiner ist als der Außendurchmesser des übrigen, in den Einfüllstutzen ragenden Abschnittes (5) des Glasstopfens (4).

5. Verfahren nach einem der Ansprüche 1 bis 4, **dadurch gekennzeichnet, dass** der Glasstopfen stufenförmig, mit einem sich an den Flansch (7) anschließenden, außen liegenden Abschnitt (6) ausgebildet ist, dessen Außendurchmesser im Wesentlichen dem Außendurchmesser des Einfüllstutzens (3) entspricht.

6. Verfahren nach einem der Ansprüche 1 bis 5, **dadurch gekennzeichnet, dass** nach Verschmelzen des Glasstopfens (4) mit dem Einfüllstutzen (3) der überstehende Abschnitt (6) durch Absägen oder-brechen entfernt wird.

7. Bausatz mit einem befüllbaren und verschließbaren Hohlkörper aus Glas, bei dem der Hohlkörper einen dünnwandigen, im Wesentlichen zylindrischen Einfüllstutzen (3) aus Glas aufweist und mit einem in den Einfüllstutzen (3) hineinpassenden Glasstopfen (4), wobei der Glasstopfen (4) als dünnwandiger Hohlkörper aus Glas ausgebildet ist und der in den Einfüllstutzen (3) hineinragende Bereich (5) des Glasstopfens (4) einen Außendurchmesser aufweist, der im Wesentlichen dem Innendurchmesser des Einfüllstutzens (3) entspricht, **dadurch gekennzeichnet, dass** der Glasstopfen (4) einen im Wesentlichen radial abstehenden Flansch (7) aufweist, dessen Außendurchmesser dem Außendurchmesser des Einfüllstutzens (3) entspricht.

8. Gefüllter Hohlkörper aus Glas des Bausatzes aus Anspruch 7 mit einem im Wesentlichen zylindrischen Einfüllstutzen (3) und einem in diesen hineinragenden, einstückig mit dem Einfüllstutzen (3) aus Glas mittels eines Schmelzvorganges verbundenen Verschlussstopfens (4) aus Glas, wobei der Einfüllstutzen (3) ein oberes freies Ende aufweist, dadurch gekenntzeichnet, dass der Verschlussstopfen (4) hohl ist, eine Wandstärke aufweist, die kleiner als die des Einfüllstutzens (3) ist, und einen radial abstehenden Flansch (7) aufweist, der auf dem oberen freien Ende des Einfüllstutzens (3) aufliegend mit diesem verschmolzen ist.

## Claims

1. Method for closing an already filled hollow glass body provided with a substantially cylindrical filling neck (3), wherein said filling neck, which is made of glass, is closed by a melting process once the hollow body has been filled, wherein said filling neck (3) has inserted therein a glass closing plug (4) which drives out at least part of the air volume located above the filling level of the hollow body and which is then fused with the circumferentially extending free end of the cylindrical filling neck (3) at the circumference thereof, whereas the region (5) of the glass plug (4) projecting into the filling neck has an outer diameter that corresponds substantially to the inner diameter of the filling neck, **characterised in that** said glass plug is provided with a radially projecting flange (7) whose outer diameter corresponds to the outer diameter of the filling neck (3) and the flange (7) has a circumferentially extending centering bevel (8) on the side facing the filling neck (3).

2. Method according to claim 1, **characterised in that** a thin-walled, hollow glass plug (4) is used, whose wall thickness is smaller than or identical to the wall thickness of the filling neck (3) and corresponds preferably to 50 % of the wall thickness of said filling neck (3).

3. Method according to either claim 1 or claim 2, **characterised in that** lettering is applied to the outer surface of the portion (5) of the glass plug (4) projecting into the filling neck (3).

4. Method according to any one of claims 1 to 3, **characterised in that**, immediately below the flange (7), the glass plug (4) has a constriction whose outer diameter is smaller than the outer diameter of the rest of the portion (5) of the glass plug (4) projecting into the filling neck.

5. Method according to any one of claims 1 to 4, **characterised in that** the glass plug takes the form of a stepped component including an external portion (6) connected to the flange (7) and having an outer diameter which corresponds substantially to the outer diameter of the filling neck (3).

6. Method according to any one of claims 1 to 5, **characterised in that**, after fusing of the glass plug (4) to the filling neck (3), the projecting portion (6) is removed by sawing off or breaking off.

7. Kit comprising a hollow glass body which can be filled and closed, said hollow body being provided with a thin-walled, substantially cylindrical glass filling neck (3) and comprising a glass plug (4) fitting into said filling neck (3), wherein said glass plug (4) takes the form of a thin-walled hollow body made of glass and the region (5) of the glass plug (4) projecting into the filling neck (3) has an outer diameter which corresponds substantially to the inner diameter of the filling neck (3), **characterised in that** the glass plug (4) is provided with a substantially radially projecting flange (7) whose outer diameter corresponds to the outer diameter of the filling neck (3).

8. Filled hollow glass body of the kit according to claim 7 comprising a substantially cylindrical filling neck (3) and a closing plug (4) which is made of glass and which projects into said glass filling neck (3) and is integrally connected thereto by means of a melting process, wherein the filling neck (3) is provided with an upper free end, **characterised in that** the closing plug (4) is hollow and has a wall thickness which is smaller than that of said filling neck (3) and is provided with a radially projecting flange (7) which is fused with the upper free end of the filling neck (3) and rests thereon.

## Revendications

1. Procédé pour fermer un corps creux en verre, rempli préalablement, qui comporte une tubulure de remplissage (3) globalement cylindrique, étant précisé que l'on ferme la tubulure de remplissage en verre, après avoir rempli le corps creux, par une opération de fusion, et qu'on introduit dans la tubulure de remplissage (3) un bouchon en verre qui refoule une partie au moins du volume d'air situé au-dessus du remplissage du corps creux, et que l'on relie ensuite par fusion, sur sa circonférence, à l'extrémité libre circulaire de la tubulure de remplissage cylindrique (3), tandis que la zone (5) du bouchon en verre (4) qui entre dans ladite tubulure présente un diamètre extérieur qui correspond globalement au diamètre intérieur de la tubulure de remplissage, **caractérisé en ce que** le bouchon en verre présente une collerette (7) qui dépasse radialement et dont le diamètre extérieur correspond au diamètre extérieur de la tubulure de remplissage (3), et la collerette (7) présente sur son côté tourné vers la tubulure (3) un biseau de centrage circulaire (8).

2. Procédé selon la revendication 1, **caractérisé en ce qu'**on utilise un bouchon en verre (4) creux, à paroi mince, dont l'épaisseur de paroi est inférieure ou égale à celle de la tubulure de remplissage (3) et représente de préférence 50% de l'épaisseur de paroi de la tubulure de remplissage (3).

3. Procédé selon l'une des revendications 1 ou 2, **caractérisé en ce qu'**une inscription est appliquée sur le côté extérieur de la partie (5) du bouchon en verre (4) qui entre dans la tubulure de remplissage (3).

4. Procédé selon l'une des revendications 1 à 3, **caractérisé en ce que** le bouchon en verre (4) présente juste au-dessous de la collerette (7) une partie resserrée dont le diamètre extérieur est inférieur au diamètre extérieur du reste de la partie (5) du bouchon en verre (4) qui entre dans la tubulure de remplissage.

5. Procédé selon l'une des revendications 1 à 4, **caractérisé en ce que** le bouchon en verre a une forme étagée, avec une partie (6) qui est située à l'extérieur, qui fait suite à la collerette (7) et dont le diamètre extérieur correspond globalement au diamètre extérieur de la tubulure de remplissage (3).

6. Procédé selon l'une des revendications 1 à 5, **caractérisé en ce qu'**après avoir relié par fusion le bouchon en verre (4) et la tubulure de remplissage (3), on enlève la partie qui dépasse (6) en la sciant ou en la cassant.

7. Ensemble comprenant un corps creux en verre apte à être rempli et apte à être fermé, étant précisé que le corps creux comporte une tubulure de remplissage (3) globalement cylindrique, en verre, à paroi mince, et comprenant un bouchon en verre (4) qui entre de manière ajustée dans la tubulure de remplissage (3), étant précisé que le bouchon en verre (4) est conçu comme un corps creux en verre à paroi mince et que la zone (5) du bouchon en verre (4) qui entre dans la tubulure de remplissage (3) présente un diamètre extérieur qui correspond globalement au diamètre intérieur de la tubulure de remplissage (3), **caractérisé en ce que** le bouchon en verre (4) présente une collerette (7) qui dépasse globalement radialement et dont le diamètre extérieur correspond au diamètre extérieur de la tubulure de remplissage (3).

8. Corps creux rempli en verre de l'ensemble de la revendication 7, avec une tubulure de remplissage (3) globalement cylindrique et un bouchon (4) en verre qui entre dans ladite tubulure (3) en verre et qui est relié d'une seule pièce à celle-ci grâce à une opération de fusion, étant précisé que la tubulure de remplissage (3) présente une extrémité libre supérieure, **caractérisé en ce que** le bouchon (4) est creux, présente une épaisseur de paroi qui est inférieure à celle de la tubulure de remplissage (3), et présente une collerette (7) qui dépasse radialement et qui est reliée par fusion à la tubulure (3) pour être posée sur l'extrémité libre supérieure de celle-ci.
